# EUROPÄISCHE PATENTSCHRIFT

(11) **EP 1 798 464 B1**
(45) Veröffentlichungstag und Bekanntmachung des Hinweises auf die Patenterteilung: **15.10.2008**
(21) Anmeldenummer: 06125383.7
(22) Anmeldetag: 05.12.2006
(51) Int. Cl.: F16N 13/22, F16N 7/38, F16N 13/00

(54) **Schmierstoffpumpe**
Lubricant pump
Pompe de graissage

(30) Priorität: 13.12.2005 DE 202005019485 U
(43) Veröffentlichungstag der Anmeldung: 20.06.2007
(73) Patentinhaber: Baier & Köppel GmbH & Co., 91257 Pegnitz (DE)
(72) Erfinder: Brendel, Jürgen, 91278 Pottenstein (DE)
(74) Vertreter: Zech, Stefan Markus

(56) Entgegenhaltungen:
- EP-A1- 1 209 038
- DE-C- 326 445
- GB-A- 279 931

## Beschreibung

Die Erfindung betrifft eine Schmierstoffpumpe zur Förderung von Schmierstoff an eine Mehrzahl von Schmierstellen, wobei die Schmierstoffpumpe einen Pumpengehäuseabschnitt sowie mehrere Pumpenelemente umfasst, die von einem gemeinsamen Antrieb angetrieben werden.

Eine derartige Schmierstoffpumpe ist bereits aus der EP 1 209 038 B1 bekannt.

In GB 279 931 A wird eine Ausführungsform eines Flüssigkeitsversorgungssystems für die selektive Zuführung von verschiedenen Flüssigkeiten, insbesondere von verschiedenen Sorten bzw. Fabrikaten von Schmierölen oder von flüssigen Treibstoffen, beschrieben, bei der jeweils eine separate Pumpe einer einzelnen Sorte von Flüssigkeit zugeordnet ist. Diese Pumpe ist über eine Saugleitung mit dem Inneren des jeweiligen Flüssigkeitskompartiment verbunden. Die Flüssigkeitskompartimente sind gemäß einer ersten Alternative um die jeweiligen Pumpen herum angeordnet oder befinden sich gemäß einer zweiten Alternative in einem Abstand von den jeweiligen Pumpen.

Die Aufgabe der vorliegenden Erfindung besteht darin, eine Schmierstoffpumpe zu schaffen, die noch universeller als die aus EP 1 209 038 B1 bekannte Schmierstoffpumpe einsetzbar ist.

Diese Aufgabe wird mit einer Schmierstoffpumpe nach den Merkmalen des Anspruches 1 gelöst. Vorteilhafte Weiterbildungen sind in den Unteransprüchen angegeben.

Ein Kerngedanke der vorliegenden Erfindung besteht darin, dass eine Schmierstoffpumpe zur Förderung von Schmierstoff geschaffen wird, die gleichzeitig mindestens zwei verschiedene Arten von Schmierstoff mit einem einzigen Antrieb zu fördern in der Lage ist. Die erfindungsgemäße Schmierstoffpumpe kann somit mit einem einzigen Antrieb bestimmten Schmierstellen Schmierfett, anderen Schmierstellen hingegen Schmieröl zuführen. Es versteht sich von selbst, dass der Gedanke der Förderung von zwei Arten unterschiedlicher Schmierstoffe an jeweils zugeordnete Schmierstellen auch dahingehend erweitert werden kann, dass drei oder mehr Arten von Schmierstoffen an jeweils zugeordnete Schmierstellen mittels einer einzigen Schmierstoffpumpe, die einen gemeinsamen Antrieb zur Förderung der unterschiedlichen Schmierstoffe umfasst, erweitert werden kann.

In der Ausgestaltung für zwei unterschiedliche Schmierstoffe stehen ein oder mehrere erste Pumpenelemente mit einem ersten Schmierstoffreservoir in Fluidverbindung, um einen ersten Schmierstoff an einen Schmierstoffauslass zu fördern und gleichzeitig stehen ein oder mehrere zweite Pumpenelemente mit einem zweiten Schmierstoffreservoir in Fluidverbindung, um einen vom ersten Schmierstoff verschiedenen zweiten Schmierstoff an einen zweiten Schmierstoffauslass zu fördern.

Bevorzugtermaßen ist der Aufbau so getroffen, dass das oder die ersten Pumpenelemente ausschließlich mit einem ersten Schmierstoffreservoir und das oder die zweiten Pumpenelemente ausschließlich mit einem zweiten Schmierstoffreservoir in Fluidverbindung stehen. Gemäß dieser Weiterbildung wird also sichergestellt, dass die jeweiligen Pumpenelemente stets nur mit ein und dem selben Schmierstoff in Kontakt kommen.

Nach einem weiteren bevorzugten Aspekt der vorliegenden Erfindung ist die Schmierstoffpumpe zur Förderung von Schmierstoff ohne Rücklauf an eine Mehrzahl von Schmierstellen ausgebildet.

Ganz generell wird bemerkt, dass unter Schmierfett für die Zwecke der vorliegenden Erfindung ein pastöser Schmierstoff verstanden wird, der aus einem Schmieröl sowie einem Eindicker (Seife, Bentonite, Polyharnstoffe, PTFE,...) besteht und/oder sich gegenüber Schmieröl durch eine höhere Konsistenzklasse unterscheidet, konkret eine NLGI-Klasse von mindestens 0 aufweist, wohingegen Schmieröle durch eine darunter liegende Konsistenz definiert sind.

Einem weiteren fakultativen Aspekt der vorliegenden Erfindung nach kann auch eine bestehende Schmierfettpumpe dadurch erweitert werden, dass zweite Pumpenelemente zur Förderung von Schmieröl in die Pumpe integriert werden.

In einer vorteilhaften Ausgestaltung sind zumindest eines der Schmierstoffreservoire, vorzugsweise erstes Schmierstoffreservoir und zweites Schmierstoffreservoir Bestandteil der Schmierstoffpumpe, weiter vorzugsweise sind zumindest eines der Schmierstoffreservoire, vorzugsweise beide Schmierstoffreservoire fest montierter Bestandteil der Schmierstoffpumpe. Hierdurch lässt sich ein sehr kompakter Aufbau der Schmierstoffpumpe inklusive des Reservoirs bzw. der Reservoire erreichen.

Ein weiterer Schmierstoff, konkret der zweite Schmierstoff, liegt in Form von Schmieröl vor, und das zweite Pumpenelement ist dabei zur Förderung von Schmieröl ausgebildet.

Es versteht sich von selbst, dass auch andere Schmierstoffe zum Einsatz gelangen können. Ein weiterer konkreter Anwendungsfall für die hier vorliegende erfindungsgemäße Schmierstoffpumpe für zwei Medien könnte in der Zurverfügungstellung von Schmieröl als ein Schmiermedium und Mörtelpaste als ein weiteres Schmiermedium liegen. Zahlreiche weitere Anwendungsfälle sind denkbar.

Der gemeinsame Antrieb für die Pumpenelemente unterschiedlicher Schmierstoffe bzw. Schmiermedien ist keineswegs festgelegt. In Betracht kommt, dass die Schmierstoffpumpe als Antrieb einen mechanischen Antrieb und/oder einen Elektromotor und/oder einen pneumatischen Antrieb und/oder einen Hydromotor umfasst. In einer weiter bevorzugten Ausgestaltung ist die Schmierstoffpumpe modular aufgebaut, so dass der Antrieb als abnehmbares Modul leicht ausgetauscht oder auch ein bestimmter Antrieb einer Antriebsart durch einen Antrieb einer anderen Antriebsart ersetzt werden kann. In einer konkreten, bevorzugten Ausgestaltung umfasst die Schmierstoffpumpe einen Pumpengehäuseabschnitt, der ein Getriebe zur Übertragung der vom Antrieb erzeugten Antriebskräfte auf die Pumpenelemente umfasst. Der das Getriebe beherbergende Pumpengehäuseabschnitt kann dabei gleichzeitig als eine Art Grundkörper oder Tragrahmen dienen, an den sich weitere Elemente der Schmierstoffpumpe, wie Schmierstoffreservoir, Antrieb und Pumpenelemente anschließen lassen.

Konkret können die Pumpenelemente im Pumpengehäuseabschnitt montiert sein und mit ihrem Schmierstoffauslass aus dem Pumpengehäuseabschnitt herausragen.

Ein besonders kompakter Aufbau wird erreicht, wenn das oder die Schmierstoffreservoire zumindest im Wesentlichen axial fluchtend zum Pumpengehäuseabschnitt montiert sind.

In einer möglichen Ausgestaltung können erstes Schmierstoffreservoir und zweites Schmierstoffreservoir als separate Kompartimente unmittelbar nebeneinander und/oder aufeinander montiert sein.

Alternativ hierzu können aber erstes Schmierstoffreservoir und zweites Schmierstoffreservoir auch in einem gemeinsamen Kompartiment ausgebildet sein, wobei das gemeinsame Kompartiment durch einen Trennboden fluiddicht unterteilt ist, so dass durch diese Unterteilung erstes Schmierstoffreservoir und zweites Schmierstoffreservoir ausgebildet werden.

Für die Zuführung der unterschiedlichen Schmierstoffe aus den Schmierstoffreservoire an die jeweils zugeordneten Pumpenelemente kommen grundsätzlich verschiedene Ausgestaltungen in Betracht. In einer bevorzugten Ausgestaltung verläuft zumindest die Schmierstoffzuführung für einen Schmierstoff bzw. ein Schmiermedium innerhalb des Pumpengehäuseabschnitts. Es ist auch möglich, beide oder alle Schmierstoffzuführungen für die unterschiedlichen Schmierstoffe bzw. Schmiermedien durch den Pumpengehäuseabschnitt zu führen. Denkbar wäre auch, zumindest eine Schmierstoffzuführung eines ersten Schmierstoffes durch das Schmierstoffreservoir eines zweiten Schmierstoffes hindurchzuführen.

Allerdings können einzelne oder auch alle Schmierstoffzuführungen auch außerhalb des Pumpengehäuseabschnitts geführt sein, was unter Umständen eine einfachere Anschlussmöglichkeit einer oder mehrerer Pumpenelemente an das zugeordnete Schmierstoffreservoir begründen kann.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine perspektivische Ansicht einer Ausführungsform der erfindungsgemäßen Schmierstoffpumpe in schematischer Darstellung
- Fig. 2: eine schematische Ansicht der Schmierstoffpumpe nach Fig. 1 mit abgenommenem Antrieb, wobei verschiedene Antriebsvarianten dargestellt sind.
- Fig. 3: eine Draufsicht auf eine gegenüber den Figuren 1 und 2 leicht abgewandelte Schmierstoffpumpe
- Fig. 4: eine Schnittansicht entlang der Linie A-A in Fig. 3

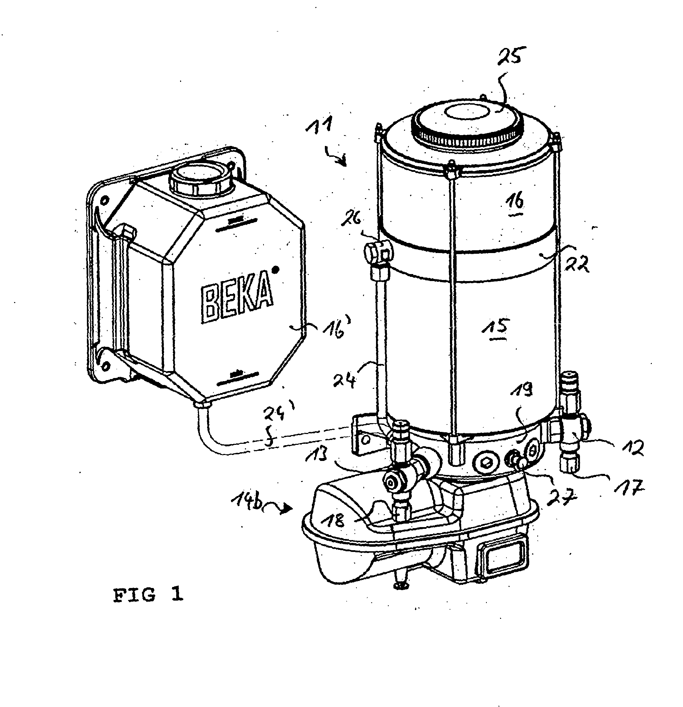

In Fig. 1 ist eine perspektivische Ansicht einer Ausführungsform einer erfindungsgemäßen Schmierstoffpumpe 11 in schematischer Darstellung veranschaulicht. Die Schmierstoffpumpe 11 umfasst einen Pumpengehäuseabschnitt 19, an dessen einem Ende ein Antrieb 14b befestigt ist. Der Antrieb 14b kann hier konkret als elektrischer Antrieb 14b umfassend einen Getriebemotor mit 12/24V DC bis 230/400V AC ausgebildet sein, wobei die Steuerung dieses elektrischen Antriebs 14b beispielsweise in der Schmierstoffpumpe 11 integriert oder extern vorgesehen sein kann.

An der dem Antrieb 14b abgewandten Seite des Pumpengehäuseabschnitts 19 ist ein erstes Schmierstoffreservoir 15 vorgesehen, in dem als Schmierstoff Schmierfett eingebracht ist. Auf dieses mit Schmierfett befüllte erste Schmierstoffreservoir 15 ist ein fluiddicht vom ersten Schmierstoffreservoir 15 getrenntes zweites Schmierstoffreservoir 16 aufgesetzt, das mit Schmieröl befüllt ist. Das erste Schmierstoffreservoir 15 ist vom zweiten Schmierstoffreservoir 16 durch einen Trennboden 22 getrennt. Das hier oben liegende, zweite Schmierstoffreservoir 16 weist einen abnehmbaren Einfülldeckel 25 auf. Bei abgenommenem Einfülldeckel 25 lässt sich Schmieröl nachfüllen. Die Nachbefüllung des ersten Schmierstoffreservoirs 15 mit Schmierfett erfolgt über einen Befüllnippel 27 am Pumpengehäuseabschnitt 19. Der Pumpengehäuseabschnitt 19, das erste Schmierstoffreservoir 15 sowie das zweite Schmierstoffreservoir 16 weisen hier eine im Wesentlichen zylindrische Grundform auf und sind axial zueinander fluchtend angeordnet. Dies ermöglicht-eine kompakte und gefällige Bauform. Selbstverständlich sind auch andere Gestaltungen denkbar.

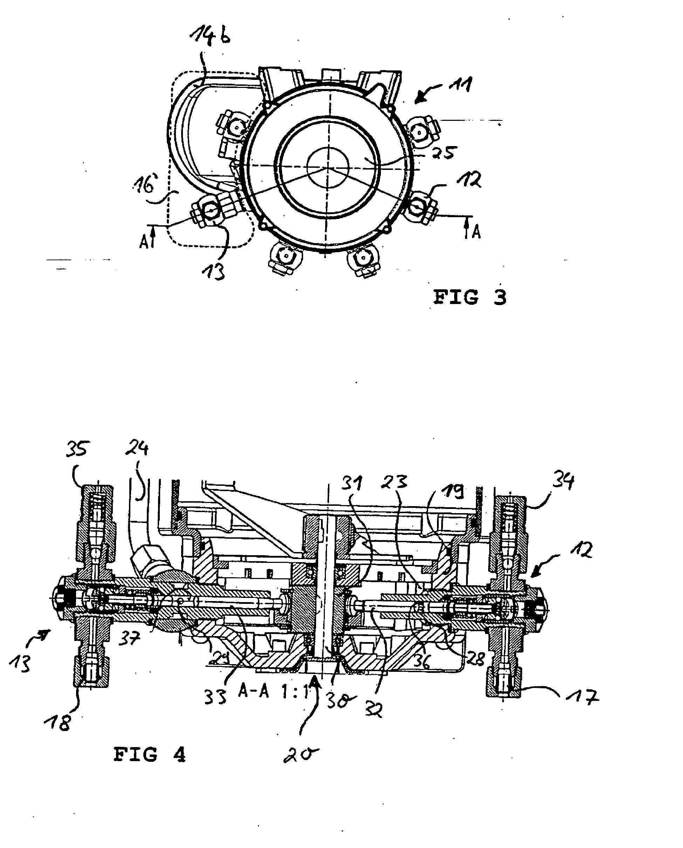

Innerhalb des Pumpengehäuseabschnitts 19 ist ein Getriebe 20 (vgl. Fig. 4) untergebracht. Mittels des Getriebes 20, das konkret eine Welle 30 und einen drehschlüssig mit der Welle 30 verbundenen Exzenter 31 umfasst, werden die Antriebskräfte des Antriebs 14b auf eine Mehrzahl von Pumpenelementen übertragen. Konkret sind bei der vorliegenden Ausführungsform ein erstes Pumpenelement 12 sowie ein zweites Pumpenelement 13 in Ausnehmungen einer Außenwand des Pumpengehäuseabschnitts 19 derart befestigt, dass ein Teil des ersten und zweiten Pumpenelements 12, 13 sich innerhalb und ein Teil außerhalb des Pumpengehäuseabschnitts 19 befindet. Das erste Pumpenelement 12 umfasst einen ersten Pumpkolben 32; in entsprechender Weise umfasst das zweite Pumpenelement 13 einen zweiten Pumpkolben 33. Erster Pumpkolben 32 und zweiter Pumpkolben 33 werden durch den gemeinsamen, vom Antrieb 14b angetriebenen Exzenter 31 zyklisch beaufschlagt, so dass das erste Pumpenelement 12 und das zweite Pumpenelement 13 jeweils Schmierstoff an einen zugeordneten ersten Schmierstoffauslass 17 bzw. einen zugeordneten zweiten Schmierstoffauslass 18 fördern können.

Dabei ist konkret vorgesehen, dass das erste Pumpenelement 12 Schmierstoff aus dem ersten Schmierstoffreservoir 15 über eine erste Schmierstoffzuführung 23 ansaugt, hier also konkret das im ersten Schmierstoffreservoir 15 aufgenommene Schmierfett an den ersten Schmierstoffauslass 17 fördert. Das erste Pumpenelement 12 weist dabei ein über einen gewissen Bereich einstellbares Pumpvolumen 36 bzw. Fördervolumen auf, wie dies an sich bekannt ist. Die erste Schmierstoffzuführung 23 mündet in Form einer ersten Ansaugbohrung 28 in das Pumpvolumen 36 des ersten Pumpenelements 12. Als Absicherung gegen Überdruck ist am ersten Pumpenelement 12 noch ein erstes Überdruckventil 34 angeschlossen.

Das zweite Pumpenelement 13 bezieht über eine zweite Schmierstoffzuführung 24 Schmierstoff aus dem zweiten Schmierstoffreservoir 16 und fördert über die Bewegung des zweiten Pumpkolbens 33 diesen Schmierstoff an den zweiten Schmierstoffauslass 18. Das bei der vorliegenden Ausführungsform im zweiten Schmierstoffreservoir 16 aufgenommene Schmieröl wird also über die Schmierstoffzuführung 24 und eine im zweiten Pumpenelement 13 angeordnete Ansaugbohrung 29 in ein Pumpvolumen 37 innerhalb des zweiten Pumpenelements 13 überführt.

Auch am zweiten Pumpenelement 13 kann zur Vermeidung von Überdruck ein zweites Überdruckventil 35 angeordnet sein.

Während bei einer ersten konkreten Ausgestaltung der Erfindung das zweite Schmierstoffreservoir 16 fluchtend über dem ersten Schmierstoffreservoir 15 angeordnet ist und der Schmierstoff, hier konkret Schmieröl, über einen Auslassanschluss 26 und die zweite Schmierstoffzuführung 24 in das zweite Pumpenelement 13 überführt wird, ist es auch möglich gemäß einer Variante, die nicht der Erfindung entspricht, das zweite Schmierstoffreservoir als externes zweites Schmierstoffreservoir 16' auszubilden, wie dies als Variante ebenfalls in Fig. 1 veranschaulicht ist. Das externe Schmierstoffreservoir 16' ist dann über eine zweite Schmierstoff zuführung 24', die in diesem Fall anstelle der zweiten Schmierstoffzuführung 24 vorgesehen ist, mit dem zweiten Pumpenelement 13 verbunden.

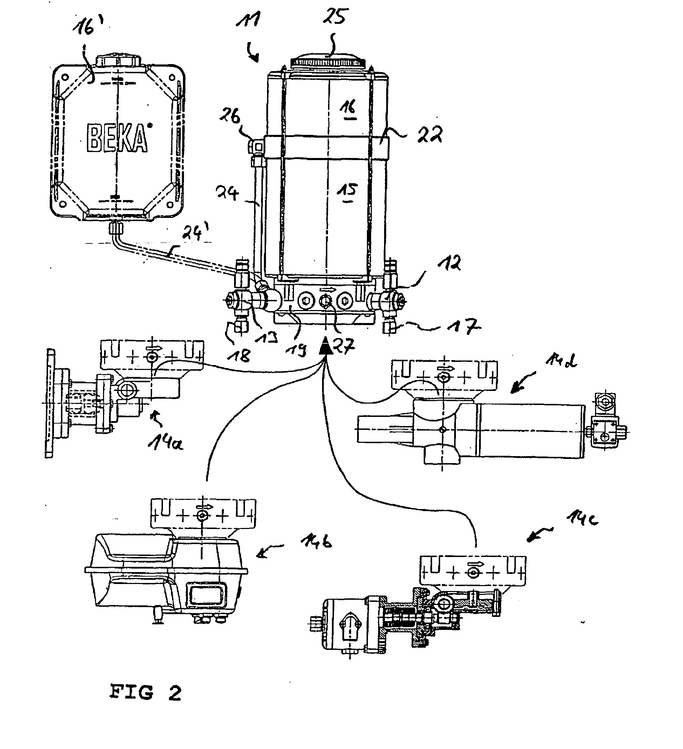

In Fig. 2 sind verschiedene Varianten für einen Antrieb 14a bis 14d, der an dem Pumpengehäuseabschnitt 19 der Schmierstoffpumpe 11 angeschlossen und mit dem Getriebe 20 der Schmierstoffpumpe 11 verbunden werden kann, veranschaulicht. Konkret könnte der Pumpengehäuseabschnitt 19 der Schmierstoffpumpe 11 mit einem mechanischen Pumpenantrieb 14a betrieben werden, der über Flansch und Kupplung beispielsweise an eine sich drehende Welle angeschlossen sein kann. Die Variante eines elektrischen Antriebs 14b wurde anhand der Fig. 1 bereits erläutert. Auch ist es denkbar, die Schmierstoffpumpe 11 mit einem hydraulischen Antrieb 14c oder einem pneumatischen Antrieb 14d zu betreiben. In Fig. 2 sind somit verschiedene an sich alternative Antriebsvarianten für die Schmierstoffpumpe 11 veranschaulicht. Die Ankopplung der Antriebe 14a bis 14b kann vorzugsweise so gestaltet sein, dass die Antriebe nicht nur durch einen Antrieb der gleichen Art ausgetauscht sondern auch die Antriebsarten gegeneinander gewechselt werden können.

In Fig. 3 ist eine Schmierstoffpumpe im Wesentlichen gemäß der anhand von Fig. 1 veranschaulichten Ausführungsform in einer Darstellung von oben gezeigt, wobei gemäß einer Variante, die nicht der Erfindung entspricht, ein externes zweites Schmierstoffreservoir 16' hier am ersten Schmierstoffreservoir 15 seitlich angeflanscht ist, was ebenfalls eine kompakte Bauform ermöglicht. Wie sich aus der Draufsicht gemäß Fig. 3 ergibt, ragt das externe zweite Schmierstoffreservoir 16 nicht wesentlich über den Antrieb 14b vor, so dass bei dieser Lösung ebenfalls eine besonders kompakte Bauform erzielt wird.

Die beschriebene Schmierstoffpumpe kann in den unterschiedlichsten Anwendungsbereichen zum Einsatz gelangen, beispielsweise überall dort, wo eine Fettschmierung für bestimmte Lager und gleichzeitig eine Ölschmierung für andere Maschinenkomponenten, wie beispielsweise für Rollenketten, etc., gefordert ist. Die hier dargestellten Pumpenelemente basieren auf dem Kolbenpumpenprinzip; es versteht sich von selbst, dass aber für die Pumpenelemente auch andere Pumpenprinzipien zum Einsatz gelangen, die Pumpenelemente beispielsweise als Zahnradpumpe oder Flügelzellenpumpe ausgebildet sein können.

Bevorzugte Anwendungen für die hier vorgeschlagene universelle Schmierstoffpumpe können insbesondere im Bereich der Landmaschinen, der Baumaschinen oder der Werkzeugmaschinen liegen.

### Bezugszeichenliste

- 11: Schmierstoffpumpe
- 12: Erstes Pumpenelement
- 13: Zweites Pumpenelement
- 14a bis 14d: Antrieb
- 15: Erstes Schmierstoffreservoir
- 16, 16': Zweites Schmierstoffreservoir
- 17: Erster Schmierstoffauslass
- 18: Zweiter Schmierstoffauslass
- 19: Pumpengehäuseabschnitt
- 20: Getriebe
- 22: Trennboden
- 23: Erste Schmierstoffzuführung
- 24, 24': Zweite Schmierstoffzuführung
- 25: Einfülldeckel
- 26: Auslassanschluss
- 27: Befüllnippel
- 28: erste Ansaugbohrung
- 29: zweite Ansaugbohrung
- 30: Welle
- 31: Exzenter
- 32: erster Pumpkolben
- 33: zweiter Pumpkolben
- 34: erstes Überdruckventil
- 35: zweites Überdruckventil
- 36, 37: Pumpvolumen

## Patentansprüche

1. Schmierstoffpumpe zur Förderung von Schmierstoff an eine Mehrzahl von Schmierstellen, wobei die Schmierstoffpumpe (11) einen Pumpengehäuseabschnitt (19) und mehrere Pumpenelemente (12, 13) umfasst, die von einem gemeinsamen Antrieb (14a bis 14d) angetrieben werden,
wobei ein oder mehrere erste Pumpenelemente (12) mit einem ersten Schmierstoffreservoir (15) in Fluidverbindung stehen, um einen ersten Schmierstoff an einen Schmierstoffauslass (17) zu fördern und
wobei ein oder mehrere zweite Pumpenelemente (13) mit einem zweiten Schmierstoffreservoir (16) in Fluidverbindung stehen, um einen vom ersten Schmierstoff verschiedenen zweiten Schmierstoff an einen zweiten Schmierstoffauslass (18) zu fördern,
**dadurch gekennzeichnet,**
**dass** zum einen das erste Schmierstoffreservoir (15) mit Fett befüllt und zwischen dem Pumpengehäuseabschnitt (19) und dem zweiten Schmierstoffreservoir (16), das mit einem anderen Schmierstoff als Fett, insbesondere mit Schmieröl, befüllt ist, angeordnet ist und zum anderen das oder die ersten Pumpenelemente (12) zur Förderung von Schmierfett ausgebildet sind.

2. Schmierstoffpumpe nach Anspruch 1,
**dadurch gekennzeichnet,**
**dass** zumindest eines der Schmierstoffreservoire (15, 16), vorzugsweise erstes Schmierstoffreservoir (15) und zweites Schmierstoffreservoir (16), - insbesondere festmontierter - Bestandteil der Schmierstoffpumpe (11) sind.

3. Schmierstoffpumpe nach Anspruch 1 oder 2,
**dadurch gekennzeichnet,**
**dass** der zweite Schmierstoff in Form von Schmieröl vorliegt und das zweite Pumpenelement (13) zur Förderung von Schmieröl ausgebildet ist.

4. Schmierstoffpumpe nach einem der Ansprüche 1 bis 3,
**dadurch gekennzeichnet,**
**dass** der Antrieb einen mechanischen Antrieb (14a) oder einen Elektromotor (14b) oder einen pneumatischen Antrieb (14d) oder einen Hydromotor (14c) umfasst.

5. Schmierstoffpumpe nach einem der Ansprüche 1 bis 4,
**dadurch gekennzeichnet,**
**dass** der Pumpengehäuseabschnitt (19) ein Getriebe (20) zur Übertragung der vom Antrieb (14a bis 14d) erzeugten Antriebskräfte auf die Pumpenelemente (12, 13) umfasst.

6. Schmierstoffpumpe nach einem der Ansprüche 1 bis 5,
**dadurch gekennzeichnet,**
**dass** die Pumpenelemente (12, 13) im Pumpengehäuseabschnitt (19) montiert sind und mit ihrem Schmierstoffauslass (17, 18) aus dem Pumpengehäuseabschnitt (19) herausragen.

7. Schmierstoffpumpe nach einem der Ansprüche 1 bis 6,
**dadurch gekennzeichnet,**
**dass** das erste Schmierstoffreservoir (15) und/oder das zweite Schmierstoffreservoir (16) zumindest im Wesentlichen axial fluchtend zum Pumpengehäuseabschnitt (19) montiert sind.

8. Schmierstoffpumpe nach einem der Ansprüche 1 bis 7,
**dadurch gekennzeichnet,**
**dass** das erste Schmierstoffreservoir (15) und das zweite Schmierstoffreservoir (16) als separate Kompartimente unmittelbar nebeneinander und/oder aufeinander montiert sind.

9. Schmierstoffpumpe nach einem der Ansprüche 1 bis 7,
**dadurch gekennzeichnet,**
**dass** das erste Schmierstoffreservoir (15) und das zweite Schmierstoffreservoir (16) in einem gemeinsamen Kompartiment (21) mit einem Trennboden (22), der das gemeinsame Kompartiment (21) in das erste Schmierstoffreservoir (15) und das zweite Schmierstoffreservoir (16) unterteilt, ausgebildet sind.

10. Schmierstoffpumpe nach einem der Ansprüche 1 bis 9,
**dadurch gekennzeichnet,**
**dass** mindestens eine erste Schmierstoffzuführung (23) vorgesehen ist, die das erste Schmierstoffreservoir (15) mit einem erstem Pumpenelement (12) verbindet, sowie mindestens eine zweite Schmierstoffzufuhr (24) vorgesehen ist, die das zweite Schmierstoffreservoir (16) mit zweitem Pumpenelement (13) verbindet, und zumindest eine der Schmierstoffzuführungen (23, 24) zumindest abschnittsweise innerhalb des Pumpengehäuseabschnitts (19) geführt ist.

11. Schmierstoffpumpe nach einem der Ansprüche 1 bis 10,
**dadurch gekennzeichnet,**
**dass** eine erste Schmierstoffzuführung (23) vorgesehen ist, die das erste Schmierstoffreservoir (15) mit dem ersten Pumpenelement (12) verbindet, und eine zweite Schmierstoffzuführung (24) vorgesehen ist, die das zweite Schmierstoffreservoir (16) mit dem zweiten Pumpenelement (13) verbindet, wobei eine der Schmierstoffzuführungen als separate Leitung außerhalb des Pumpengehäuseabschnitts (19) geführt ist.

## Claims

1. A lubricant pump for feeding lubricant to a plurality of lubricating points, wherein said lubricant pump (11) comprises a pump housing portion (19) and a number of pump elements (12, 13) driven by a common drive mechanism (14a through 14d), one or more first pump elements (12) being in fluid communication with a first lubricant reservoir (15) so as to feed a first lubricant to a lubricant outlet (17), and
one or more second pump elements (13) being in fluid communication with a second lubricant reservoir (16) so as to feed a second lubricant that is different from the first lubricant to a second lubricant outlet (18),
**characterized in that**
on the one hand, the first lubricant reservoir (15) is filled with grease and is arranged between the pump housing portion (19) and the second lubricant reservoir (16) that is filled with another lubricant than grease, in particular with lubricating oil, and, on the other hand, the first pump element/s (12) is/are configured for feeding lubricating grease.

2. The lubricant pump according to claim 1,
**characterized in that**
at least one of the lubricant reservoirs (15, 16), preferably the first lubricant reservoir (15) and the second lubricant reservoir (16), are an - in particular fixedly mounted - component of the lubricant pump (11).

3. The lubricant pump according to claim 1 or claim 2,
**characterized in that**
the second lubricant is present in the form of lubricating oil and the second pump element (13) is configured for feeding lubricating oil.

4. The lubricant pump according to any one of claims 1 through 3,
**characterized in that**
the drive mechanism comprises a mechanical drive mechanism (14a) or an electric motor (14b) or a pneumatic drive mechanism (14d) or an hydraulic motor (14c).

5. The lubricant pump according to any one of claims 1 through 4,
**characterized in that**
the pump housing portion (19) comprises a transmission (20) for transmitting the driving forces generated by the drive mechanism (14a through 14d) to the pump elements (12, 13).

6. The lubricant pump according to any one of claims 1 through 5,
**characterized in that**
the pump elements (12, 13) are mounted in the pump housing portion (19) and protrude from the pump housing portion (19) with their lubricant outlet (17, 18).

7. The lubricant pump according to any one of claims 1 through 6,
**characterized in that**
the first lubricant reservoir (15) and/or the second lubricant reservoir (16) is/are mounted at least essentially in axial alignment with the pump housing portion (19).

8. The lubricant pump according to any one of claims 1 through 7,
**characterized in that**
the first lubricant reservoir (15) and the second lubricant reservoir (16) are mounted immediately side by side and/or on top of each other as separate compartments.

9. The lubricant pump according to any one of claims 1 through 7,
**characterized in that**
the first lubricant reservoir (15) and the second lubricant reservoir (16) are formed in a common compartment (21) having a separating bottom (22) dividing the common compartment (21) into the first lubricant reservoir (15) and the second lubricant reservoir (16).

10. The lubricant pump according to any one of claims 1 through 9,
**characterized in that**
at least a first lubricant feed line (23) is provided connecting the first lubricant reservoir (15) with first pump element (12), and at least a second lubricant feed line (24) is provided connecting the second lubricant reservoir (16) with second pump element (13), and at least one of the lubricant feed lines (23, 24) being at least portion-wise disposed within the pump housing portion (19).

11. The lubricant pump according to any one of claims 1 through 10,
**characterized in that**
at least a first lubricant feed line (23) is provided connecting the first lubricant reservoir (15) with the first pump element (12), and a second lubricant feed line (24) is provided connecting the second lubricant reservoir (16) with the second pump element (13), one of the lubricant feed lines being disposed outside the pump housing portion (19) as a separate line.

## Revendications

1. Pompe à lubrifiant destinée à délivrer du lubrifiant à une pluralité de points de lubrification, la pompe à lubrifiant (11) comprenant une section de carter de pompe (19) et plusieurs éléments de pompe (12, 13) qui sont entraînés par un entraînement commun (14a à 14d),
un ou plusieurs premiers éléments de pompe (12) étant en communication fluide avec un premier réservoir à lubrifiant (15) pour délivrer un premier lubrifiant à une sortie de lubrifiant (17) et
un ou plusieurs seconds éléments de pompe (13) étant en communication fluide avec un second réservoir à lubrifiant (16) pour délivrer un second lubrifiant différent du premier lubrifiant à une seconde sortie de lubrifiant (18),
**caractérisée en ce que,**
d'une part, le premier réservoir à lubrifiant (15) est rempli de graisse et disposé entre la section de carter de pompe (19) et le second réservoir à lubrifiant (16) qui est rempli d'un autre lubrifiant que la graisse, en particulier de l'huile lubrifiante, et d'autre part, le ou les premiers éléments de pompe (12) sont constitués de façon à délivrer de la graisse lubrifiante.

2. Pompe à lubrifiant selon la revendication 1,
**caractérisée en ce que**
au moins l'un des réservoirs à lubrifiant (15, 16), de préférence le premier réservoir à lubrifiant (15) et le second réservoir à lubrifiant (16), font partie intégrante - et en particulier montée à demeure - de la pompe à lubrifiant (11).

3. Pompe à lubrifiant selon la revendication 1 ou 2,
**caractérisée en ce que**
le second lubrifiant est présent sous forme d'huile lubrifiante et que le second élément de pompe (13) est constitué de façon à délivrer de l'huile lubrifiante.

4. Pompe à lubrifiant selon l'une des revendications 1 à 3,
**caractérisée en ce que**
l'entraînement comprend un entraînement mécanique (14a) ou un moteur électrique (14b) ou un entraînement pneumatique (14d) ou un moteur hydraulique (14c).

5. Pompe à lubrifiant selon l'une des revendications 1 à 4,
**caractérisée en ce que**
la section de carter de pompe (19) comprend une transmission (20) destinée à transmettre les forces motrices produites par l'entraînement (14a à 14d) aux éléments de pompe (12, 13).

6. Pompe à lubrifiant selon l'une des revendications 1 à 5,
**caractérisée en ce que**
les éléments de pompe (12, 13) sont montés dans la section de carter de pompe (19) et dépassent de la section de carter de pompe (19) avec leur sortie de lubrifiant (17, 18).

7. Pompe à lubrifiant selon l'une des revendications 1 à 6,
**caractérisée en ce que**
le premier réservoir à lubrifiant (15) et/ou le second réservoir à lubrifiant (16) est monté/sont montés, au moins pour l'essentiel, dans l'alignement axial de la section de carter de pompe (19).

8. Pompe à lubrifiant selon l'une des revendications 1 à 7,
**caractérisée en ce que**
le premier réservoir à lubrifiant (15) et le second réservoir à lubrifiant (16) sont montés sous forme de compartiments distincts directement l'un à côté de l'autre et/ou l'un sur l'autre.

9. Pompe à lubrifiant selon l'une des revendications 1 à 7,
**caractérisée en ce que**
le premier réservoir à lubrifiant (15) et le second réservoir à lubrifiant (16) sont constitués dans un compartiment commun (21) avec un fond de séparation (22) qui subdivise le compartiment commun (21) pour former le premier réservoir à lubrifiant (15) et le second réservoir à lubrifiant (16).

10. Pompe à lubrifiant selon l'une des revendications 1 à 9,
**caractérisée en ce que**
au moins une première arrivée de lubrifiant (23) est prévue, qui relie le premier réservoir à lubrifiant (15) à un premier élément de pompe (12), ainsi qu'au moins une seconde arrivée de lubrifiant (24) est prévue, qui relie le second réservoir à lubrifiant (16) à un second élément de pompe (13), et au moins l'une des arrivées de lubrifiant (23, 24) passant au moins en partie à l'intérieur de la section de carter de pompe (19).

11. Pompe à lubrifiant selon l'une des revendications 1 à 10,
**caractérisée en ce que**
une première arrivée de lubrifiant (23) est prévue, qui relie le premier réservoir à lubrifiant (15) au premier élément de pompe (12), et une seconde arrivée de lubrifiant (24) est prévue, qui relie le second réservoir à lubrifiant (16) au second élément de pompe (13), l'une des arrivées de lubrifiant passant sous forme de conduite distincte à l'extérieur de la section de carter de pompe (19).
